# EUROPÄISCHE PATENTSCHRIFT

(11) **EP 3 212 462 B1**
(45) Veröffentlichungstag und Bekanntmachung des Hinweises auf die Patenterteilung: **01.05.2019**
(21) Anmeldenummer: 15787187.2
(22) Anmeldetag: 28.10.2015
(51) Int. Cl.: B60N 2/68, B60R 21/207, B60N 2/60, B60N 2/58, B60R 21/215

(54) **FAHRZEUGSITZ MIT EINEM SEITENAIRBAGMODUL**
VEHICLE SEAT WITH A SIDE AIRBAG MODULE
SIÈGE DE VÉHICULE AVEC MODULE D'AIRBAG LATERAL

(30) Priorität: 29.10.2014 DE 102014222085
(43) Veröffentlichungstag der Anmeldung: 06.09.2017
(73) Patentinhaber: Volkswagen Aktiengesellschaft, 38440 Wolfsburg (DE)
(72) Erfinder: GRABOWSKI, Martin, 31234 Rietze (DE); NEUMANN, Matthias, 38122 Braunschweig (DE)
(86) Internationale Anmeldenummer: PCT/EP2015/074958
(87) Internationale Veröffentlichungsnummer: WO 2016/066674

(56) Entgegenhaltungen:
- EP-A2- 1 818 209
- DE-A1-102015 203 910
- FR-A1- 2 887 829
- US-B1- 8 905 431

## Beschreibung

Die Erfindung betrifft einen Fahrzeugsitz, insbesondere Sportsitz, nach dem Oberbegriff des Patentanspruches 1.

In der Rückenlehne eines solchen Fahrzeugsitzes kann ein Seitenairbagmodul integriert sein, dessen Airbag in einem der Fahrzeugseitenwand zugewandten Bereich der Rückenlehne angeordnet ist und sich im Crashfall zwischen dem Insassen und der Fahrzeugseitenwand, etwa der B-Säule und/oder der Seitentür, entfaltet.

Aus der DE 20 2005 021 200 U1 ist ein Sportsitz bekannt, der eine Lehnenschale als tragende Struktur und ein Seitenairbagmodul aufweist, das im normalen Fahrbetrieb von einer Abdeckung überdeckt ist und bei einer crashbedingten Airbagaktivierung einen Airbagaustritt freigibt. Die Abdeckung ist außenseitig auf einer ungepolsterten sowie unbezogenen Außenseite der Lehnenschale angebracht. Zudem ist die Abdeckung als eine vom Rückenlehnen-Stoffbezug freigelegte Blende mit Sichtflächen ausgebildet. Die haubenförmige Blende ist an ihrem Haubenrand bevorzugt über Schraubverbindungen an der Rückenlehne montiert. Zudem weist die Abdeckung eine Sollbruchstelle auf, die bei einer crashbedingten Airbag-Aktivierung vom sich entfaltenden Airbag unter Freigabe eines Airbagaustrittes auseinandergerissen wird. Auf diese Weise werden Klappenbereiche der Abdeckung freigegeben, die um ein in der Abdeckung integriertes Filmscharnier aufschwenken können.

In der obigen DE 20 2005 021 200 U1 ist die Abdeckung fertigungstechnisch aufwändig so auszulegen, dass bei der Airbagaktivierung der sich entfaltende Airbag nicht an einer freigelegten Bruchkante der Sollbruchstelle beschädigt wird und dass keine Bruchsegmente in den Fahrzeuginnenraum geschleudert werden.

Aus der EP 1 818 209 A2 ist ein gattungsgemäßer Sportschalensitz für ein Fahrzeug bekannt. Aus der FR 2 887 829 A1 ist ein weiterer Fahrzeugsitz bekannt.

Die Aufgabe der Erfindung besteht darin, einen Fahrzeugsitz bereitzustellen, bei dem die Montage des Seitenairbagmoduls vereinfacht ist und die Abdeckung fertigungstechnisch einfacher herstellbar ist.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf dem Sachverhalt, dass die Airbag-Abdeckung bezüglich Crashsicherheit hohe Anforderungen erfüllen muss, wodurch die aus dem Stand der Technik Abdeckung fertigungstechnisch entsprechend aufwändig gestaltet ist. Vor diesem Hintergrund ist gemäß dem Patentanspruch 1 die Abdeckung nicht mehr nur ausschließlich über Schraubverbindungen an der Lehnenschale befestigt, sondern zumindest teilweise über eine Steckverbindung an der Lehnenschale angebunden. Bei der Steckverbindung ist ein Rand der Abdeckung in einer Montagerichtung in einen Steckkanal der Lehnenschale reversibel eingeschoben. Auf diese Weise ist ein im Vergleich zur Verschraubung einfacher Montagevorgang ermöglicht. Zusätzlich kann die Abdeckung im Crashfall entgegen der Montagerichtung sowie unter Freigabe des Airbagaustrittes vom Steckkanal gelöst werden. Erfindungsgemäß erfolgt daher die Freigabe des Airbagaustrittes ohne ein Aufbrechen oder Aufreißen der Abdeckung, so dass sich keine Bruchkanten oder Bruchsegmente ergeben.

Die Abdeckung weist somit - im Gegensatz zum obigen Stand der Technik - keine Sollbruchstelle auf. Vielmehr ist die Abdeckung bevorzugt insgesamt flexibel sowie bruchfest ausgeführt sowie an der Steckverbindung derart gelagert, dass die Abdeckung durch Reibung und Überpressung kraftschlüssig im Steckkanal fixiert ist. Auf diese Weise kann im Crashfall die Abdeckung nach dem Lösen der Steckverbindung unter Deformation den Airbagaustritt freigeben.

In einer technischen Umsetzung der Erfindung ist zusätzlich zur Steckverbindung zumindest eine weitere Anbindungsstelle bereitgestellt, bei der die Abdeckung kraft- und formschlüssig an der Lehnenschale angebunden ist. Im Gegensatz zur lösbaren Steckverbindung ist somit die Abdeckung an der kraft- und formschlüssigen Anbindungsstelle auch bei einer crashbedingten Airbagaktivierung unlösbar an der Lehnenschale angebunden. Bevorzugt kann die kraft- und formschlüssige Anbindungsstelle durch Schraubverbindungen realisiert sein. Um im Crashfall eine hohe Verbindungssteifigkeit bereitzustellen, ist es bevorzugt, wenn die Schraubbolzen nicht mit der Abdeckung verklebt sind, sondern vielmehr in die Abdeckung einlaminiert sind.

Um im Crashfall eine möglichst leichtgängige Deformation der Abdeckung zu erzielen, ist es von Vorteil, wenn die kraft- und formschlüssige Anbindungsstelle einerseits und die Steckverbindung andererseits jeweils an gegenüberliegenden Randseiten der Abdeckung vorgesehen sind. Im Hinblick auf eine einwandfreie Funktionsfähigkeit des Seitenairbags ist es bevorzugt, die in der Fahrzeuglängsrichtung vordere Randseite der Abdeckung über die Steckverbindung zu befestigen und die in der Fahrzeuglängsrichtung hintere Randseite der Abdeckung über die kraft- und formschlüssige Anbindungsstelle zu befestigen. Auf diese Weise wird eine Airbagentfaltung in Richtung Fahrzeugfront gewährleistet.

Die Rückenlehne des Fahrzeugsitzes kann in gängiger Praxis einen Schaumkörper als Polsterung aufweisen, der in den offenen Hohlraum der Lehnenschale eingelegt ist und mit einem Bezugsstoff bezogen ist. Bevorzugt kann der Steckkanal der Lehnenschale nicht nur in Steckverbindung mit der Abdeckung bringbar sein, sondern in Doppelfunktion zur Bespannung des Bezugsstoffes verwendet werden, dessen Stoffrand zusammen mit der Abdeckung in den Steckkanal einsteckbar ist. In diesem Fall kann der Steckkanal als ein sogenannter Trimmkanal sich entlang des Schalenrandes der Lehnenschale erstrecken und in der Fahrzeuglängsrichtung betrachtet nach hinten ein offenes U-Profil aufweisen. Bei der Montage wird ein Rand der Airbag-Abdeckung unter Aufbau von Klemmkräften in den Steckkanal eingeschoben. Unter einem Bezugsstoff ist materialunabhängig jeglicher Art von Bezug, insbesondere auch ein Lederbezug, zu verstehen.

Die Lehnenschale kann beispielhaft aus einem faserverstärkten Kunststoff (im vorliegenden Fall CFK) bestehen und auf seiner, dem Fahrzeuginsassen zugewandten Vorder- oder Innenseite mit einer Polsterung versehen sein. Eine materialidentische Ausführung der Airbag-Abdeckung aus reinem CFK ist dagegen nachteilig, da reines CFK unter Biegebelastung ein sprödes Verhalten zeigt und somit Bruchgefahr für die Abdeckung bestehen würde. Vor diesem Hintergrund ist die Abdeckung aus einem Laminat aus Faserverbund sowie aus thermo-/duroplastischem Kunststoff gebildet. Das Laminat ist mehrlagig aufgebaut, wobei die Lagenanzahl und/oder das Lagenmaterial in Abhängigkeit von Steifigkeitsanforderungen oder vom Verhalten unter Biegebelastung variiert.

Die Abdeckung ist in drei Flächenbereiche aufgeteilt, nämlich in einem ersten Bereich, in dem die Kraft- und formschlüssige Anbindungsstelle ausgebildet ist, sowie einem zweiten Bereich, in dem die Steckverbindung ausgebildet ist. Der Steckverbindungs-Bereich ist im Gegensatz zum Bereich der Anbindungsstelle mit hohem Biegevermögen sowie einfach deformierbar auszuführen. Die beiden Bereiche können unter Zwischenschaltung eines Mittelbereiches ineinander übergehen.

Ein einwandfreies Biegeverhalten im Crashfall ergibt sich beispielhaft, wenn der Laminataufbau im Bereich der Anbindungsstelle der Abdeckung vierlagig mit zwei benachbarten CFK-Lagen, einer EPDM-Lage sowie einer weiteren CFK-Lage ausgebildet ist. Im Bereich der Anbindungsstelle der Abdeckung kann der Laminataufbau dagegen dreilagig ausgeführt sein, und zwar mit zwei benachbarten CFK-Lagen sowie einer EPDM-Lage. Im mittleren Übergangsbereich kann dagegen der Laminataufbau der Abdeckung zweilagig mit einer CRK-Lage und einer EPDM-Lage ausgebildet sein, wodurch der Mittelbereich der Abdeckung - im Vergleich zum biegsamen Steckverbindungs-Bereich - ausreichend verstärkt ist, um in Einbaulage eine gute Formstabilität der Abdeckung zu gewährleisten.

Es zeigen:
- Fig. 1: in einer perspektivischen Teildarstellung von hinten einen Fahrzeugsitz in Alleinstellung;
- Fig. 2: eine Teilschnittdarstellung des Fahrzeugsitzes aus der Fig. 1;
- Fig. 3: eine Ansicht, in der eine Montage einer Airbag-Abdeckung an den Fahrzeugsitz veranschaulicht ist; und
- Fig. 4 bis 6: jeweils den Laminataufbau in unterschiedlichen Flächenbereichen der Airbag-Abdeckung des Seitenairbagmoduls des Fahrzeugsitzes.

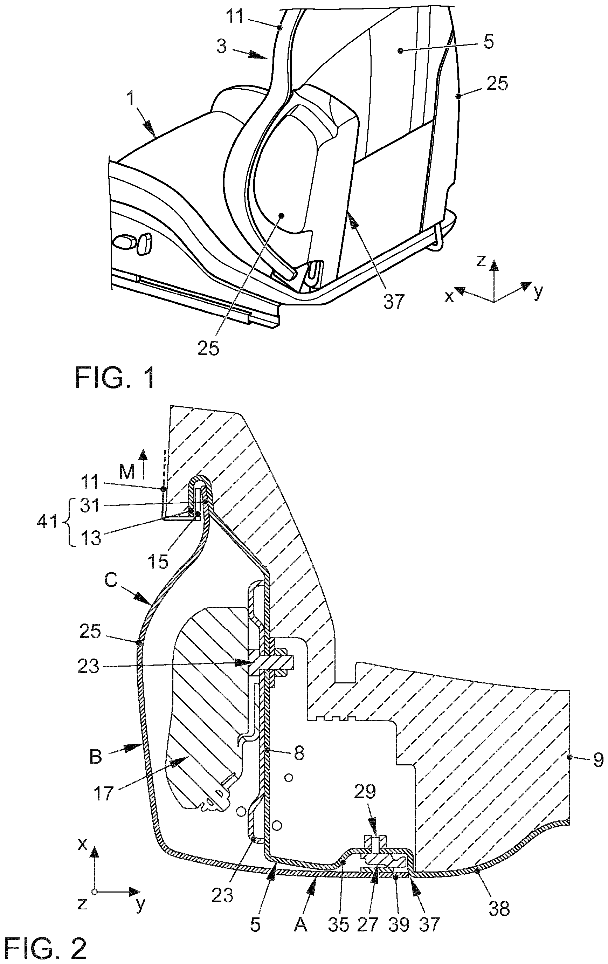

In der Fig. 1 ist ein Fahrzeugsitz mit einem Sitzteil 1 und einer Rückenlehne 3 gezeigt. Die Anordnung des Fahrzeugsitzes in einem Kraftfahrzeug definiert die nachfolgend verwendeten Raumrichtungen x, y, z. Die Rückenlehne 3 weist als tragende Struktur an ihrer Rückseite eine Lehnenschale 5 auf, die beispielsweise aus einem faserverstärkten Kunststoff gefertigt ist. Die Lehnenschale 5 ist, in der Fahrzeughochrichtung z betrachtet, unten angrenzend zum Sitzteil 1 sowie seitlich mit nach vorne gezogenen Seitenwangen 8 ausgebildet. In den schalenförmigen Hohlraum der Lehnenschale 5 ist in gängiger Praxis eine Schaumkörper-Polsterung 9 (Fig. 2) eingelegt, die mit einem Bezugsstoff 11 bezogen ist.

Wie aus der Fig. 1 weiter hervorgeht, ist der Schalenrand der Lehnenschale 5 durch einen U-profilförmigen Trimmkanal 13 gebildet, der in der Fahrzeuglängsrichtung x betrachtet nach hinten offen ist. Zum Spannen des Bezugsstoffes 11 weist dieser am Stoffrand ein Trimmprofil 15 (Fig. 2) auf, das in den Trimmkanal 13 eingesteckt ist.

Zudem weist der Fahrzeugsitz ein Seitenairbagmodul 17 auf, das auf der ungepolsterten sowie unbezogenen Außenseite der Seitenwange 8 der Lehnenschale 5 befestigt ist. Das Seitenairbagmodul 17 weist einen Gasgenerator sowie einen Airbag auf und ist in den Figuren lediglich insoweit dargestellt, als es für das Verständnis der Erfindung erforderlich ist. Die Komponenten des Seitenairbagmoduls 17 sind über in der Fig. 2 angedeutete Adapterelemente 23 an der Außenseite der Lehnenschalen-Seitenwange 8 befestigt. Das Seitenairbagmodul 17 ist im normalen Fahrbetrieb mit einer haubenförmigen Airbag-Abdeckung 25 sichtgeschützt überdeckt.

Die Airbag-Abdeckung 25 ist durch eine einseitige Verschraubung 29 an der Lehnenschale 5 kraft- und formschlüssig befestigt. Hierzu weist die Abdeckung 25 an ihrer, in der Fahrzeuglängsrichtung x hinteren Randseite 39 eine Anbindungsstelle 27 auf, in der in der Fahrzeughochrichtung z voneinander beabstandete Schraubbolzen 29 (in der Fig. 2 ist lediglich einer angedeutet) in das Material der Abdeckung 25 einlaminiert sind. Die Schraubbolzen 29 sind mit einer an der Rückseite 38 der Lehnenschale 5 gebildeten Abstufung 35 verschraubt. Die Abstufung 35 kann dabei um einen Höhenversatz gegenüber der Lehnen-Rückseite 38 zurückgesetzt sein, der in etwa der Materialstärke der Abdeckung 25 entspricht. Dadurch ergibt sich an der Verbindungsfuge 37 (Fig. 2) ein weitgehend flächenbündiger Übergang zwischen der Abdeckung 25 und der Lehnen-Rückseite 38.

Demgegenüber ist die in der Fahrzeuglängsrichtung x gegenüberliegende vordere Randseite 31 nicht mit der Lehnenschale 5 fest verschraubt, sondern vielmehr in einer Steckverbindung 41 mit dem in der Fahrzeuglängsrichtung x nach hinten offenen Trimmkanal 13. Sowohl die vordere Randseite 31 der Abdeckung 25 als auch das Trimmprofil 15 des Bezugsstoffes 11 sind unter Aufbau einer vordefinierten Klemmkraft in den Trimmkanal 13 reversibel eingeschoben, das heißt in der Fahrzeuglängsrichtung x betrachtet schwimmend gelagert.

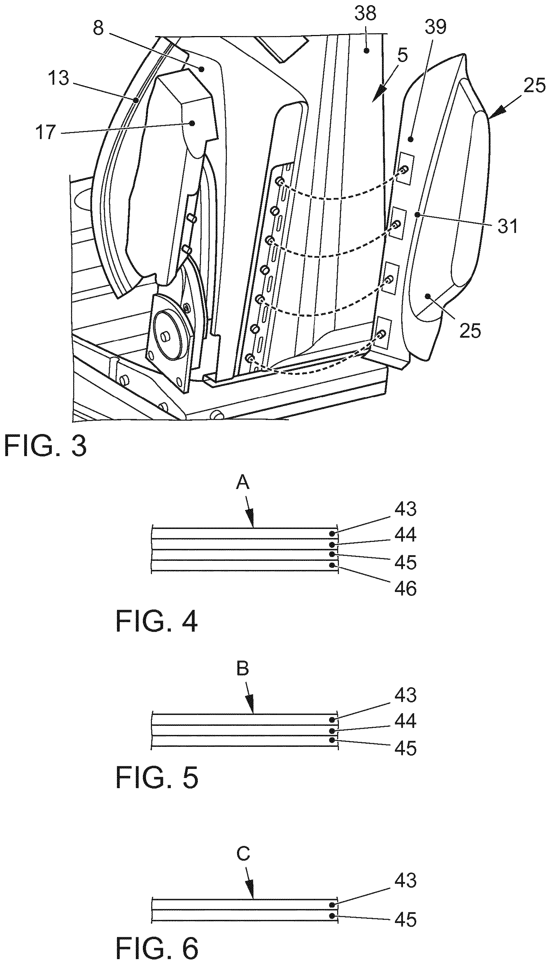

In der Fig. 3 ist der Montagevorgang zur Befestigung der Abdeckung 25 am Fahrzeugsitz angedeutet. Demzufolge wird die Abdeckung 25 in einer Schwenkbewegung auf die Außenseite der Lehnenschale 5 gesetzt, bei der der vordere Rand 31 der Abdeckung 25 in der Montagerichtung M (Fig. 2) in den Trimmkanal 13 eingeschoben wird. Anschließend wird der hintere Rand 31 der Abdeckung 25 mit der Lehnenschale 5 verschraubt.

Bei einer crashbedingten Aktivierung erfolgt eine schlagartige Entfaltung des Seitenairbags, wodurch dieser gegen die Innenseite der Abdeckung 25 drückt. Auf diese Weise wird die reversible Steckverbindung 41 gelöst und die Abdeckung 25 unter Freigabe des Airbagaustrittes deformiert. Hierfür ist die Abdeckung 25 ausreichend flexibel sowie bruchfest ausgeführt.

Zur flexiblen sowie bruchfesten Auslegung kann die Abdeckung 25 gemäß der Fig. 2 in drei Flächenbereiche A, B, C eingeteilt sein. Der Flächenbereich A der Abdeckung betrifft die kraft- und formschlüssige Anbindungsstelle 27, der Flächenbereich C betrifft die Steckverbindung 41 zur Lehnenschale 5, während der Flächenbereich B zwischen den beiden randseitigen Flächenbereichen A und C ausgebildet ist. Um bei einer Airbagaktivierung ein einwandfreies Biegeverhalten zu erzielen, ist der Flächenbereich A besonders bauteilsteif mit stark reduziertem Biegevermögen ausgeführt, während der Flächenbereich C - im Vergleich zum Flächenbereich A - mit sehr hohem Biegevermögen sowie einfach deformierbar ausgebildet ist. Der Mittelbereich B ist demgegenüber mit ausreichend großer Formstabilität versehen.

In den Fig. 4 bis 6 ist beispielhaft jeweils der Laminataufbau in den unterschiedlichen Flächenbereichen A, B, C gezeigt. Gemäß der Fig. 4 ist der Laminataufbau im Flächenbereich A vierlagig ausgeführt, und zwar mit zwei benachbarten CFK-Lagen 43, 44, einer EPDM-Lage 45 sowie einer weiteren CFK-Lage 46. Gemäß der Fig. 5 ist der Laminataufbau im Flächenbereich B dreilagig mit ebenfalls zwei benachbarten CFK-Lagen 43, 44 sowie einer EPDM-Lage 45 ausgebildet. Demgegenüber ist gemäß der Fig. 6 der Laminataufbau im Flächenbereich C zweilagig mit nur einer CFK-Lage 43 sowie einer EPDM-Lage 45 ausgebildet.

## Patentansprüche

1. Fahrzeugsitz, insbesondere Sportsitz, mit einem Sitzteil (1) und einer Rückenlehne (3), die eine Lehnenschale (5) als tragende Struktur und ein Seitenairbagmodul (17) aufweist, das im normalen Fahrbetrieb von einer Abdeckung (25) überdeckt ist und bei einer crashbedingten Airbag-Aktivierung einen Airbagaustritt freigibt, welche Abdeckung (25) außenseitig auf der Lehnenschale (5) befestigt ist, **dadurch gekennzeichnet, dass** die Abdeckung (25) zumindest teilweise über eine Steckverbindung (41) an der Lehnenschale (5) angebunden ist, bei der ein Rand (31) der Abdeckung (25) in einer Montagerichtung (M) in einen Steckkanal (13) der Lehnenschale (5) reversibel eingeschoben ist, und dass die Abdeckung (25) im Crashfall entgegen der Montagerichtung (M) unter Freigabe des Airbagaustritts vom Steckkanal (13) lösbar ist, dass zusätzlich zur Steckverbindung zumindest eine weitere Anbindungsstelle (27) bereitgestellt ist, bei der die Abdeckung (25) form- und kraftschlüssig an der Lehnenschale (5) angebunden ist, dass die Abdeckung (25) aus einem Laminat aus Faserverbund sowie aus thermo-/duroplastischem Kunststoff gebildet ist, dass das Laminat mehrlagig aufgebaut ist, und dass die Lagenanzahl und/oder das Lagenmaterial in Abhängigkeit von Steifigkeitsanforderungen an die Abdeckung (25) variiert, und dass die kraft- und formschlüssige Anbindungsstelle (27) in einem Flächenbereich (A) der Abdeckung (25) ausgebildet ist, der bauteilsteif mit stark reduziertem Biegevermögen ausgeführt ist, und dass die Steckverbindung (41) in einem Flächenbereich (C) der Abdeckung (25) ausgebildet ist, der im Vergleich zum Flächenbereich (A) mit hohem Biegevermögen sowie einfach deformierbar ausgeführt ist, und dass zwischen den Flächenbereichen (A, C) ein Mittelbereich (B) ausgebildet ist.

2. Fahrzeugsitz nach Anspruch 1, **dadurch gekennzeichnet, dass** die Anbindungsstelle (27) im Gegensatz zur Steckverbindung (41) selbst bei einer crashbedingten Airbag-Aktivierung unlösbar an der Lehnenschale (5) angebunden bleibt, und dass insbesondere die Anbindungsstelle (27) Schraubbolzen (29) zur Verschraubung mit der Lehnenschale (5) aufweist, die bevorzugt in die Abdeckung (25) einlaminiert sind.

3. Fahrzeugsitz nach Anspruch 1 oder 2, **dadurch gekennzeichnet, dass** die Anbindungsstelle (27) und die Steckverbindung (41) an gegenüberliegenden Randseiten (31, 39) der Abdeckung (25) vorgesehen sind, und dass insbesondere, in der Fahrzeug-Einbaulage betrachtet, die in der Fahrzeuglängsrichtung (x) vordere Randseite (31) der Abdeckung (25) über die Steckverbindung (41) befestigt ist und die in der Fahrzeuglängsrichtung (x) hintere Randseite (39) der Abdeckung (25) über die Anbindungsstelle (27) befestigt ist.

4. Fahrzeugsitz nach einem der vorhergehenden Ansprüche, **dadurch gekennzeichnet, dass** in der Lehnenschale (5) eine Polsterung (9) eingelegt ist, die mit einem Bezugsstoff (11) bezogen ist, und dass in den Steckkanal (13) nicht nur die Abdeckung (25), sondern auch ein Bezugsstoffrand (15) eingesteckt ist zur Bespannung des Bezugsstoffes (11), und/oder dass der Steckkanal (13) am Schalenrand der Lehnenschale (5) ausgebildet ist.

5. Fahrzeugsitz nach einem der vorhergehenden Ansprüche, **dadurch gekennzeichnet, dass** die Abdeckung (25) weitgehend ohne Materialschwächung, etwa eine Sollbruchstelle oder dergleichen, flexibel und bruchfest ausgeführt ist, und dass die Abdeckung (25) im Crashfall unter Deformation den Airbagaustritt freigibt.

6. Fahrzeugsitz nach einem der vorhergehenden Ansprüche, **dadurch gekennzeichnet, dass** der Laminataufbau im Flächenbereich (A) der Abdeckung (25) vierlagig mit zwei benachbarten CFK-Lagen (43, 44), einer EPDM-Lage (45) sowie einer weiteren CFK-Lage (46) ausgebildet ist, und/oder dass der Laminataufbau im Flächenbereich (B) der Abdeckung (25) dreilagig mit zwei benachbarten CFK-Lagen (43, 44) und einer EPDM-Lage (45) ausgebildet ist, und/oder dass der Laminataufbau im Flächenbereich (C) der Abdeckung (25) zweilagig mit einer CFK-Lage (43) und einer EPDM-Lage (45) ausgebildet ist.

## Claims

1. Vehicle seat, in particular sports seat, with a seat part (1) and a backrest (3) which has a backrest shell (5) as supporting structure and a side airbag module (17), which is covered by a covering (25) in the normal driving mode and releases deployment of the airbag in the event of a crash-induced airbag activation, which covering (25) is fastened on the outer side of the backrest shell (5), **characterized in that** the plug-in covering (25) is at least partially connected to the backrest shell (5) via a plug-in connection (41), in which an edge (31) of the covering (25) is reversibly pushed in an installation direction (M) into a plug-in channel (13) of the backrest shell (5), and **in that**, in the event of a crash, the covering (25) is detachable from the plug-in channel (13) counter to the installation direction (M) by release of the deployment of the airbag, **in that**, in addition to the plug-in connection, at least one further connecting point (27) is provided in which the covering (25) is connected in a form- and force-fitting manner to the backrest shell (5), **in that** the covering (25) is formed from a laminate consisting of fibre composite and of thermoplastic/thermosetting plastic, **in that** the laminate has a multi-layered design, and **in that** the number of layers and/or the layer material varies depending on the rigidity requirements imposed on the covering (25), and **in that** the force- and form-fitting connecting point (27) is formed in a surface region (A) of the covering (25) that is designed to be rigid with a greatly reduced bending capability, and **in that** the plug-in connection (41) is formed in a surface region (C) of the covering (25) that, in comparison to the surface region (A), is designed with a high bending capability and so as to be easily deformable, and **in that** a central region (B) is formed between the surface regions (A, C).

2. Vehicle seat according to Claim 1, **characterized in that**, by contrast to the plug-in connection (41), the connecting point (27) remains connected nondetachably to the backrest shell (5) even in the event of a crash-inducted activation of the airbag, and **in that** in particular the connecting point (27) has screw bolts (29) for screwing to the backrest shell (5), said screw bolts preferably being laminated into the covering (25).

3. Vehicle seat according to Claim 1 or 2, **characterized in that** the connecting point (27) and the plug-in connection (41) are provided on opposite edge sides (31, 39) of the covering (25), and **in that**, in particular, as viewed in the vehicle installation position, the front edge side (31) of the covering (25) in the longitudinal direction (x) of the vehicle is fastened via the plug-in connection (41) and the rear edge side (39) of the covering (25) in the longitudinal direction (x) of the vehicle is fastened via the connecting point (27).

4. Vehicle seat according to one of the preceding claims, **characterized in that** a pad (9) which is covered with an upholstery fabric (11) is placed in the backrest shell (5), and **in that** not only the covering (25), but also an upholstery fabric edge (15) is plugged into the plug-in channel (13) in order to tension the upholstery fabric (11), and/or in that the plug-in channel (13) is formed on the shell edge of the backrest shell (5).

5. Vehicle seat according to one of the preceding claims, **characterized in that** the covering (25) is formed flexibly and non-breakably substantially without a material weakening, for example a predetermined breaking point or the like, and **in that** the covering (25), by deformation in the event of a crash, releases the deployment of the air bag.

6. Vehicle seat according to one of the preceding claims, **characterized in that** the laminate structure in the surface region (A) of the covering (25) is of four-layered design with two adjacent CFRP layers (43, 44), an EPDM layer (45) and a further CFRP layer (46), and/or **in that** the laminate structure in the surface region (B) of the covering (25) is of three-layered design with two adjacent CFRP layers (43, 44) and an EPDM layer (45), and/or **in that** the laminate structure in the surface region (C) of the covering (25) is of two-layered design with a CFRP layer (43) and an EPDM layer (45).

## Revendications

1. Siège de véhicule, en particulier siège de sport, avec une partie de siège (1) et un dossier (3), qui présente une coque de dossier (5) comme structure portante et un module d'airbag latéral (17), qui en situation de fonctionnement normale est recouvert par un couvercle (25) et lors d'une activation de l'airbag causée par une collision libère une sortie d'airbag, ledit couvercle (25) étant fixé extérieurement sur la coque de dossier (5), **caractérisé en ce que** le couvercle (25) est relié au moins en partie par une liaison par broche (41) à la coque de dossier (5), dans laquelle un bord (31) du couvercle (25) est engagé de façon réversible dans une direction de montage (M) dans un canal de broche (13) de la coque de dossier (5), et **en ce que** le couvercle (25) peut être séparé du canal de broche (13), en cas de collision, inversement à la direction de montage (M) avec libération de la sortie d'airbag, **en ce qu'**en plus de la liaison par broche il est prévu un autre point de liaison (27) par lequel le couvercle (25) est relié par emboîtement et par adhérence à la coque de dossier (5), **en ce que** le couvercle (25) est formé en un stratifié de composite de fibres ainsi que d'une matière plastique thermoplastique/- thermodurcissable, **en ce que** le stratifié est réalisé à plusieurs couches, et **en ce que** le nombre de couches et/ou le matériau des couches varie en fonction des exigences de rigidité du couvercle (25), et **en ce que** le point de liaison par adhérence et par emboîtement (27) est formé dans une région de surface (A) du couvercle (25), qui est réalisée sous forme de composant rigide avec une flexibilité réduite, et **en ce que** la liaison par broche (41) est formée dans une région de surface (C) du couvercle (25), qui par comparaison avec la région de surface (A) est réalisée avec une flexibilité élevée et de façon aisément déformable, et **en ce qu'**une région intermédiaire (B) est formée entre les régions de surface (A, C).

2. Siège de véhicule selon la revendication 1, **caractérisé en ce que** contrairement à la liaison par broche (41) le point de liaison (27) reste attaché à la coque de dossier (5) de façon inséparable même en cas d'activation de l'airbag causée par une collision, et **en ce que** notamment le point de liaison (27) présente des boulons à visser (29) pour le boulonnage à la coque de dossier (5), qui sont de préférence intégrés dans le couvercle (25).

3. Siège de véhicule selon une revendication 1 ou 2, **caractérisé en ce que** le point de liaison (27) et la liaison par broche (41) sont prévus dans des côtés de bord opposés (31, 39) du couvercle (25), et **en ce que** notamment, considéré dans la position de montage dans le véhicule, le côté de bord avant (31) du couvercle (25) dans la direction longitudinale (x) du véhicule est fixé au moyen de la liaison par broche (41), et le côté de bord arrière (39) du couvercle (25) dans la direction longitudinale (x) du véhicule est fixé au moyen du point de liaison (27).

4. Siège de véhicule selon l'une quelconque des revendications précédentes, **caractérisé en ce qu'**un rembourrage (9), qui est recouvert d'une étoffe d'habillage (11), est introduit dans la coque de dossier (5), et **en ce que** non seulement le couvercle (25) mais aussi un bord de l'étoffe d'habillage (15) est engagé dans le canal de broche (13) afin de tendre l'étoffe d'habillage (11), et/ou **en ce que** le canal de broche (13) est formé sur le bord de coque de la coque de dossier (5).

5. Siège de véhicule selon l'une quelconque des revendications précédentes, **caractérisé en ce que** le couvercle (25) est réalisé largement sans affaiblissement de la matière, par exemple un point de rupture théorique ou similaire, et est flexible et résistant à la rupture, et **en ce que** le couvercle (25) libère la sortie d'airbag avec déformation en cas de collision.

6. Siège de véhicule selon l'une quelconque des revendications précédentes, **caractérisé en ce que** la structure stratifiée est réalisée dans la région de surface (A) du couvercle (25) en quatre couches avec deux couches de CFK voisines (43, 44), une couche d'EPDM (45) ainsi qu'une autre couche de CFK (46), et/ou **en ce que** la structure stratifiée est réalisée dans la région de surface (B) du couvercle (25) en trois couches avec deux couches de CFK voisines (43, 44) et une couche d'EPDM (45), et/ou **en ce que** la structure stratifiée est réalisée dans la région de surface (C) en deux couches avec une couche de CFK (43) et une couche d'EPDM (45).
